# EUROPÄISCHE PATENTSCHRIFT

(11) **EP 2 947 353 B1**
(45) Veröffentlichungstag und Bekanntmachung des Hinweises auf die Patenterteilung: **02.09.2020**
(21) Anmeldenummer: 15164963.9
(22) Anmeldetag: 24.04.2015
(51) Int. Cl.: F16H 63/30, F16H 59/70, A01D 43/00

(54) **TRIEBACHSE FÜR EIN FAHRZEUG**
DRIVE AXLE FOR A VEHICLE
ESSIEU-MOTEUR DE VÉHICULE

(30) Priorität: 19.05.2014 DE 102014106989
(43) Veröffentlichungstag der Anmeldung: 25.11.2015
(73) Patentinhaber: CLAAS Industrietechnik GmbH, 33106 Paderborn (DE)
(72) Erfinder: Tilly, Thomas, 48231 Warendorf (DE); Engenhorst, Werner, 33428 Harsewinkel (DE); Scheibel, Christoph, 33604 Bielefeld (DE)
(74) Vertreter: CLAAS Gruppe

(56) Entgegenhaltungen:
- EP-A1- 2 400 187
- DE-A1- 19 929 632
- DE-A1-102007 036 292
- GB-A- 2 159 217

## Beschreibung

Die Erfindung betrifft eine Triebachse gemäß dem Oberbegriff des Anspruchs 1.

Landwirtschaftliche Fahrzeuge, insbesondere selbstfahrende Erntemaschinen wie Feldhäcksler oder Mähdrescher sind oftmals mit einer hydrostatisch angetriebenen Vorderachse ausgestattet. Dies hat verschiedene Gründe; zunächst lastet bei selbstfahrenden Erntemaschinen ein hoher Anteil des Gesamtgewichts im vorderen Maschinenbereich, so dass eine für den Fahrantrieb insbesondere bei Feldfahrt erforderliche Traktion vorrangig an der Vorderachse zur Verfügung steht. Ein hydrostatischer Achsantrieb bietet dabei den Vorzug einer - zumindest bereichsweise - mit konstruktiv verhältnismäßig einfachen Mitteln stufenlos regelbaren Fahrgeschwindigkeit. Eine hydraulische Versorgung des Fahrantriebs lässt sich zumeist mit geringem Aufwand realisieren, da die Fahrzeuge zumeist sowieso über eine Hydraulikversorgung verfügen, beispielsweise für deren Erntegut verarbeitenden Arbeitsaggregate.

Triebachsen genannter Fahrzeuge verfügen somit üblicherweise über einen Hydromotor, der durch Verstellung seines Schluckvolumens (oder durch Verstellung des Schluckvolumens einer den Hydromotor versorgenden Förderpumpe) in der Geschwindigkeit veränderbar ist. Da insbesondere landwirtschaftliche Fahrzeuge wie Feldhäcksler oder Mähdrescher sowohl für die Feldfahrt (verhältnismäßig geringe Fahrgeschwindigkeit) als auch für die Straßenfahrt (verhältnismäßig hohe Fahrgeschwindigkeit) eingesetzt werden, ist es üblich, die Triebachse mit einem Schaltgetriebe auszustatten. Dieses ist beispielsweise in zwei oder drei Gangstufen schaltbar, so dass sich - abhängig von der jeweiligen Getriebespreizung - verschiedene Fahrbereiche (z.B. Feldfahrt, Straßenfahrt) darstellen lassen, innerhalb derer die Fahrgeschwindigkeit des Fahrzeugs jeweils durch bloße Verstellung der Förderleistung im Hydraulikkreis des Fahrantriebs stufenlos veränderbar ist.

Ein zum Einsatz kommendes Schaltgetriebe kann grundsätzlich unterschiedlicher Bauart sein. Beispielsweise kann dieses mit einer Klauenschaltung ausgestattet sein, d.h. einer Schaltung, bei der ein Klauenring axial verschoben wird, um ein Zahnrad einer gewünschten Zahnradpaarung in formschlüssige Antriebsverbindung mit der Getriebewelle zu bringen. Alternativ kann es sich um ein sogenanntes Schieberadgetriebe handeln, d.h. ein mehrgängiges Getriebe, bei dem die verschiedenen Übersetzungen durch axiales Verschieben von Räderblöcken auf einer Getriebewelle eingelegt werden. In beiden Fällen erfolgt das Schalten zwischen verschiedenen Gangstufen durch axiales Verschieben (axial bezogen auf die Getriebewelle) mittels eines Stellelements. Eine beispielhafte Triebachse eines Feldhäckslers, die mit einem Schaltgetriebe ausgestattet ist, wird in DE 10 2007 036 292 A1 beschrieben.

Es ist weiterhin bekannt, eine wie im Zusammenhang der DE 10 2007 036 292 A1 beschriebene Triebachse mit Sensoren zur Erfassung der eingelegten Gangstufe auszustatten, um auf diese Weise eine Gangerkennung zu ermöglichen. Zum Einsatz kommen dabei beispielsweise mehrere Stößelschalter, von denen jeweils ein Stößelschalter eine Position einer Schaltstange erkennen kann. Nachteilig an dieser Art der Gangerkennung ist, dass abhängig von der Art und Bauweise des Schaltgetriebes mehrere, beispielsweise 5 Stößelschalter einschließlich entsprechender Verkabelung benötigt werden. Ist nur einer dieser Schalter - oder dessen Verkabelung - defekt, lässt sich eine Fehlerzuordnung unter Umständen nur mit großem Aufwand treffen. Dabei kann sogar eine Demontage der Triebachse bzw. des Schaltgetriebes erforderlich sein, auch wenn nur ein elektrischer Fehler des Schalters oder Kabels vorliegt.

Es ist daher eine Aufgabe der vorliegenden Erfindung eine Triebachse der genannten Art anzugeben, die ein Schaltgetriebe mit einer vereinfacht aufgebauten Gangerkennung aufweist und die hinsichtlich der Möglichkeiten zur Fehlerdiagnose und Wartung verbessert ist.

Die genannte Aufgabe wird gelöst durch eine Triebachse gemäß Anspruch 1. Diese zeichnet sich erfindungsgemäß dadurch aus, dass die Sensoranordnung einen Drehwinkelgeber aufweist, der über mechanische Führungsmittel mit dem zumindest einen Stellelement kinematisch gekoppelt ist, um abhängig von der Position des zumindest einen Stellelements ein Winkelsignal zu erzeugen, das auf die eingelegte Gangstufe des Schaltgetriebes schließen lässt.

Dabei wurde erfindungsgemäß zunächst erkannt, dass die Anzahl von elektrischen bzw. elektronischen Komponenten, die an einer Triebachse zur Erkennung einer gewählten Gangstufe verbaut werden, möglichst gering zu halten ist. Denn derartige Komponenten können unter den typischen Einsatzbedingungen von Landmaschinen, bei denen Schmutz und Feuchtigkeit an den Achskörper gelangen, beschädigt oder zumindest in deren Funktion beeinträchtigt werden. Je mehr dieser Komponenten verbaut und verkabelt sind, desto schwieriger und aufwändiger gestalten sich die Fehlerdiagnose und -behebung. Vor diesem Hintergrund ist die Idee entwickelt worden, bei einem Gangstufenwechsel durchgeführte Bewegungen des zumindest einen Stellelements mittels eines Drehwinkelgebers zu erfassen, der über mechanische Führungsmittel mit dem zumindest einen Stellelement kinematisch gekoppelt ist. Die mechanischen Führungsmittel sind dabei so gestaltet, dass der Drehwinkelgeber abhängig von der Position des Stellelements ein Winkelsignal erzeugt, aus dem auf die eingelegte Gangstufe geschlossen werden kann. Ein Vorteil dieser Gestaltung ist, dass mit nur einer elektrischen Messeinrichtung, nämlich einem konstruktiv einfach gestalteten Drehwinkelgeber, mehrere Positionen eines oder sogar mehrerer Stellelemente erfasst werden können.

Abhängig von der Art der mechanischen Führungsmittel und der kinematischen Kopplung mit dem Drehwinkelgeber eignet sich die Sensoranordnung grundsätzlich für verschiedene Arten von mehrgängigen Schaltgetrieben, wie beispielsweise Klauenschaltgetriebe oder Schieberadgetriebe, die an Triebachsen landwirtschaftlicher Fahrzeuge zum Einsatz kommen können. Die Sensoranordnung kann vorteilhaft so gestaltet sein, dass diese für verschiedene Getriebetypen einen gleichen Grundaufbau aufweist. Da nur ein Drehwinkelgeber zur Erfassung sämtlicher Gangstufen erforderlich ist, verringern sich in jedem Fall der Montage- und Verkabelungsaufwand sowie die Störanfälligkeit im Betrieb. Zudem ist im Falle einer Störung die Fehlerdiagnose und - behebung deutlich erleichtert. Die eingangs genannte Aufgabe wird somit gelöst.

Bevorzugt handelt es sich bei dem zumindest einen beweglichen Stellelement um eine Schaltstange, die zwischen verschiedenen jeweils mit einer Gangstufe korrespondierenden Positionen verschiebbar ist. Eine Schaltstange dient zur Verschiebung von Getriebekomponenten wie - abhängig von der Bauart des Schaltgetriebes - beispielsweise Klauenringen, Räderblöcken oder dergleichen. Die Verschiebung wird beispielsweise je Schaltstange mit Hilfe eines doppelwirkenden hydraulischen Schaltzylinders durchgeführt, der auf die Schaltstange eine für die Verschiebung erforderliche Kraft ausüben kann.

Erfindungsgemäß umfassen die zum Einsatz kommenden mechanischen Führungsmittel eine dem Drehwinkelgeber zugeordnete um eine Drehachse drehbar gelagerte Kurvenscheibe sowie ein am Stellelement angeordnetes Eingriffselement, wobei das Eingriffselement und die Kurvenscheibe so ausgebildet und zueinander angeordnet sind, dass eine Verschiebung des Stellelements durch gegenseitigen Kontakt von Eingriffselement und Kurvenscheibe eine Drehung der Kurvenscheibe bewirkt. Durch das Zusammenwirken von Eingriffselement und Kurvenscheibe wird somit eine translatorische Bewegung der Schaltstange mechanisch in eine Rotationsbewegung der Kurvenscheibe umgewandelt. Letztere lässt sich konstruktiv einfach mittels eines kostengünstig herstellbaren Drehwinkelgebers erfassen.

An der Kurvenscheibe ist eine Führungsbahn ausgebildet, die einen Kontaktbereich zwischen Kurvenscheibe und Eingriffselement bildet. Der Verlauf und die Anordnung der Führungsbahn in Bezug auf die Drehachse der Kurvenscheibe geben dabei einen Zusammenhang zwischen einer Bewegung des Stellelements und einer dadurch ausgelösten Drehung der Kurvenscheibe vor. Verschiedene Geometrien der Führungsbahn sind denkbar.

Gemäß einer vorteilhaften Gestaltung der Kurvenscheibe wird die Führungsbahn durch eine das Eingriffselement teilweise aufnehmende vorzugsweise längliche Nut gebildet. Eine solche Gestaltung (Nut) bietet den Vorteil, dass sich die Kurvenscheibe bei beiden Bewegungsrichtungen des Stellelements weitestgehend spielfrei führen lässt.

Eine konstruktiv einfache Ausführung der Sensoranordnung besteht darin, dass die Kurvenscheibe drehfest mit einer Messwelle des Drehwinkelgebers verbunden ist, wobei vorzugsweise die Drehachse der Kurvenscheibe mit der Messwelle zusammenfällt. Die damit vorliegende mechanische Verbindung zwischen Kurvenscheibe und Messwelle bietet den Vorteil einer besonders direkten und störungsfreien Übertragung der Drehbewegung von der Kurvenscheibe auf die Messwelle.

Alternativ ist es denkbar, und unter bestimmten Umständen vorteilhaft, dass der Kurvenscheibe ein Magnet zugeordnet ist und der Drehwinkelgeber einen Magnetfeldsensor aufweist, um einen Drehwinkel der Kurvenscheibe berührungslos zu erfassen. In diesem Fall entfällt die Notwendigkeit einer mechanischen Verbindung zwischen Kurvenscheibe und Drehwinkelgeber. Daraus ergibt sich unter anderem der Vorteil, dass Verspannungen in der Messwelle vermieden werden können, indem die Lagerung der (Kontaktkräfte aufnehmenden) Kurvenscheibe ganz unabhängig von der Messwelle des Drehwinkelgebers ist.

Das Schaltgetriebe der Triebachse weist gemäß einer Ausführungsform der Erfindung eine einzige Schaltstange auf, mit der sich verschiedene Gangstufen schalten lassen. Gemäß einer Weiterbildung der Erfindung kann die Triebachse aber auch zwei verschiebbare Schaltstangen aufweisen, wobei der Drehwinkelgeber über die mechanischen Führungsmittel mit beiden Schaltstangen kinematisch koppelbar ist. In diesem Fall lässt sich mittels des nur einen Drehwinkelgebers vorteilhaft die Stellung von zwei Schaltstangen erfassen.

Dazu verlaufen die Schaltstangen vorteilhaft parallel zueinander und sind voneinander beabstandet, wobei die Drehachse der Kurvenscheibe gegenüber einer ersten Schaltstange weniger beabstandet ist als gegenüber einer zweiten Schaltstange (außermittige Anordnung). Der unterschiedliche Abstand, also die außermittige Anordnung der Drehachse gegenüber den Schaltstangen bewirkt, dass die Kurvenscheibe aufgrund unterschiedlicher wirksamer Hebellängen in unterschiedlichem Maße durch Verschiebungen der Schaltstangen ausgelenkt (verdreht) wird. Anders ausgedrückt: Die näher an der Drehachse der Kurvenscheibe verlaufende Schaltstange bewirkt bei gleicher translatorischer Verschiebung eine stärkere Drehung der Kurvenscheibe als die weiter von der Drehachse entfernte Schaltstange. Der Drehwinkelgeber erzeugt somit unterschiedliche Winkelsignale, wodurch vorteilhaft die kinematische Kopplung zwischen dem zumindest einen Stellelement und dem Drehwinkelgeber so gestaltet ist, dass sich ein vom Drehwinkelgeber erzeugtes Winkelsignal eindeutig einer eingelegten Gangstufe zuordnen lässt.

In konstruktiver Hinsicht lässt sich dies vorteilhaft umsetzen, indem an der Kurvenscheibe mehrere, vorzugsweise zwei Führungsbahnen ausgebildet sind, wobei eine der Führungsbahnen als Kontaktbereich zwischen Kurvenscheibe und einem Eingriffselement einer ersten Schaltstange dient und eine weitere Führungsbahn als Kontaktbereich zwischen Kurvenscheibe und einem Eingriffselement einer weiteren Schaltstange dient. Die Kurvenbahnen können dabei einen individuellen Verlauf aufweisen.

Ganz allgemein sind der Kurvenscheibe vorteilhaft Rückstellmittel zugeordnet, insbesondere eine sich gegenüber dem Sensorgehäuse abstützende Federanordnung, die auf die Kurvenscheibe eine drehwinkelabhängige Rückstellkraft ausüben, um zwischen Kurvenscheibe und Eingriffselement eine spielfreie Berührung zu gewährleisten.

Es kann sich bei dem Drehwinkelgeber grundsätzlich um einen Absolutwertgeber und/oder einen Inkrementalwertgeber handeln. Da die absolute Genauigkeit von Drehwinkelgebern von Umgebungseinflüssen beeinflusst werden kann, sieht eine vorteilhafte Weiterbildung vor, dass dem Drehwinkelgeber eine Auswerteinrichtung zugeordnet ist, die es ermöglicht, die jeweils eingelegte Gangstufe anhand von Differenzen der Winkelsignale zu erkennen. Demnach wird vorteilhaft die sich zwischen zwei Gangstufen an der Kurvenscheibe ergebende Winkeldifferenz zur Gangerkennung genutzt. Die Auswerteinrichtung kann bei der Beurteilung der Winkeldifferenz auf Erfahrungswerte zurückgreifen, die sich über eine vorige Betriebsdauer eingestellt haben.

Eine konstruktiv vorteilhafte Gestaltung der Erfindung sieht vor, dass die Sensoranordnung ein etwa hohlzylinderförmiges Sensorgehäuse aufweist, wobei der Drehwinkelgeber und die Kurvenscheibe an gegenüberliegenden Seiten des Sensorgehäuses angeordnet und durch das Sensorgehäuse hindurch über eine Messwelle drehfest verbunden sind. Die Verbindung zwischen Drehwinkelgeber und Kurvenscheibe befindet sich damit in einem durch das Sensorgehäuse geschützten Bereich.

Bei einer solchen Gestaltung bietet sich weiterhin der Vorteil, dass die Sensoranordnung mittels des Sensorgehäuses an einem durch das Gehäuse der Triebachse verlaufenden Durchgang, insbesondere im Bereich des Schaltgetriebes, derart befestigt sein kann, dass sich die Kurvenscheibe innerhalb und der Drehwinkelgeber außerhalb des Gehäuses der Triebachse befinden. Der Drehwinkelgeber - als empfindlicheres elektronisches Bauteil - kann so auf verhältnismäßig einfache Weise kontrolliert und gegebenenfalls (bei Defekt) ausgetauscht werden.

Die Erfindung wird nachfolgend anhand konkreter Ausführungsbeispiele, die in einer beigefügten Zeichnung dargestellt sind, näher erläutert. Daraus ergeben sich auch weitere vorteilhafte Effekte und Wirkungen der Erfindung. In der Zeichnung zeigt:
- Fig. 1: eine perspektivische Ansicht einer Triebachse,
- Fig. 2: eine Explosionsdarstellung einer Sensoranordnung,
- Fig. 3: eine Sensoranordnung, die eine Kurvenscheibe mit gekrümmter Führungsbahn aufweist, in perspektivischer Ansicht,
- Fig. 4: eine Sensoranordnung, die eine Kurvenscheibe mit länglicher Führungsbahn aufweist, in perspektivischer Ansicht,
- Fig. 5: eine Draufsicht auf eine Kurvenscheibe an einem Schaltgetriebe mit zwei Schaltstangen.

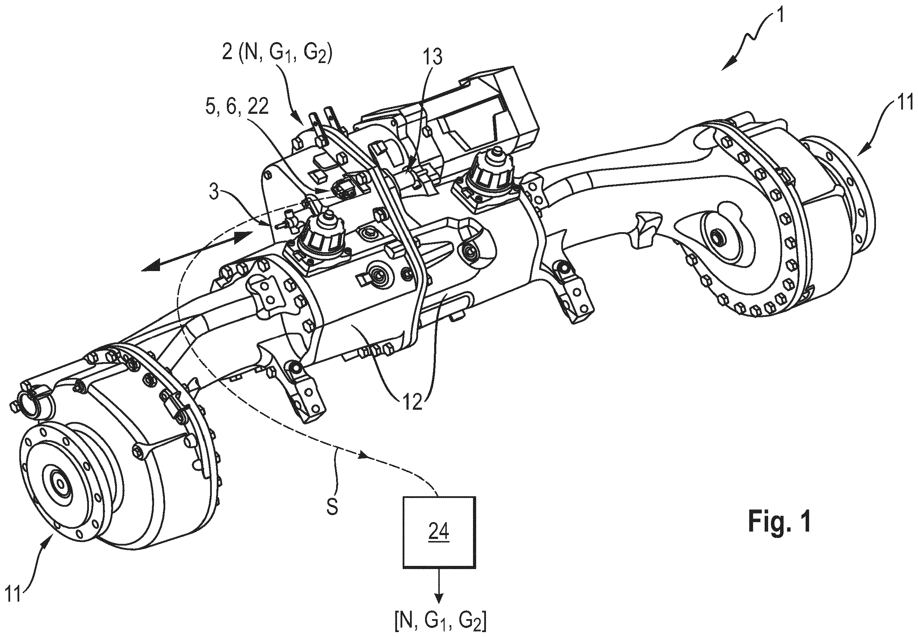

Fig. 1 zeigt eine perspektivische Ansicht einer Triebachse 1 eines landwirtschaftlichen Fahrzeugs. Konkret handelt es sich dabei um eine ungelenkte, starre Vorderachse eines (nicht gezeigten, jedoch wie beispielsweise in DE 10 2007 036 292 A1 beschriebenen) Feldhäckslers, die mittels eines hydrostatischen Motors antreibbar ist. Ein mehrteiliges Achsgehäuse 12 der Triebachse 1 umfasst im Wesentlichen einen aus zwei Getriebehälften gebildeten Mittelteil sowie jeweils seitlich an den Mittelteil angeflanschte Achsträgereinheiten mit Radabtrieben 11. An jeden der beiden Radabtriebe 11 ist jeweils ein Vorderrad des Feldhäckslers über eine Flanschfläche montierbar.

Das Achsgehäuse 12 nimmt in dessen Mittelteil ein Schaltgetriebe 2 auf, das mittels einer Klauenschaltung in mehrere Gangstufen N (neutral), G₁ (erste Gangstufe) und G₂ (zweite Gangstufe) schaltbar ist. Zum Schalten der Gangstufen N, G₁, G₂ dient eine Schaltstange 3, die sich über einen am Achsgehäuse 12 angeordneten Schaltzylinder 13 in axialer Richtung verschieben lässt. Durch Verschieben der Schaltstange 3 wird auf für sich bekannte Weise innerhalb des Schaltgetriebes 2 ein Klauenring axial verschoben, um - je nach gewünschter Gangstufe - ein Zahnrad einer entsprechenden Zahnradpaarung in formschlüssige Antriebsverbindung mit der Getriebewelle zu bringen (G₁, G₂) oder eine solche Antriebsverbindung zu unterbrechen (N).

Bei der gezeigten Triebachse 1 ist die Schaltstange 3 in drei verschiedene Positionen verschiebbar, von denen jede mit einer der drei Gangstufen N, G₁, G₂ korrespondiert. Um erkennen zu können, welche der drei Gangstufen N, G₁, G₂ im Schaltgetriebe 2 eingelegt ist bzw. ob und wie weit der Schaltzylinder 13 die Schaltstange 3 noch verschieben muss, ist die Triebachse 1 mit einer Sensoranordnung 5 zur Erfassung der eingelegten Gangstufe ausgestattet. In der Darstellung gemäß Fig. 1 ist von dieser Sensoranordnung 5 lediglich ein außenliegender Drehwinkelgeber 6 zu sehen. Die Sensoranordnung 5 erstreckt sich weiterhin durch einen im Achsgehäuse 12 vorgesehenen Gehäusedurchgang 22 in das Schaltgetriebe 2 hinein.

Wie anhand nachfolgender Figuren noch zu erläutern, ist der Drehwinkelgeber 6 über mechanische Führungsmittel mit der Schaltstange 3 kinematisch gekoppelt ist, um abhängig von der Position der Schaltstange 3 ein Winkelsignal S zu erzeugen, aus dem sich auf die eingelegte Gangstufe N, G₁, G₂ des Schaltgetriebes 2 schließen lässt. Die kinematische Kopplung zwischen der Schaltstange 3 und dem Drehwinkelgeber 6 ist demnach so gestaltet, dass sich ein vom Drehwinkelgeber 6 erzeugtes Winkelsignal S eindeutig einer eingelegten Gangstufe N, G₁, Gₙ zuordnen lässt. Der Drehwinkelgeber 6 ist dazu über eine Signalleitung mit einer Auswertelektronik 24 verbunden, die aus dem Winkelsignal S anhand hinterlegter Zusammenhänge eine Information über die jeweils eingelegte Gangstufe N, G₁, G₂ ableitet. Dabei kann die Auswerteinrichtung 24 auch betreibbar sein, die jeweils eingelegte Gangstufe N, G₁, G₂ anhand von Differenzen der Winkelsignale S zu erkennen. Vorzugsweise erfasst die Auswertelektronik 24 das Winkelsignal S periodisch, insbesondere in kurzen zyklischen Zeitabständen. Typischerweise besteht ein innerhalb des Schaltgetriebes 2 stattfindender Schaltvorgang aus einer Beschleunigungs-, einer Gleichlauf- und einer Verzögerungsphase. Die Zeitdauer der Schaltbewegung wie auch die noch anhand der nachfolgenden Figuren zu erläuternde Kurvenform einer Kurvenscheibe 8 geben zusätzliche Informationen über den Zustand des Schaltgetriebes 2. Beispielsweise könnten daraus Informationen abgeleitet werden, ob der Schaltdruck zu hoch oder zu klein ist, oder ob Prellen oder Verschleiß im Schaltgetriebe 2 stattfinden.

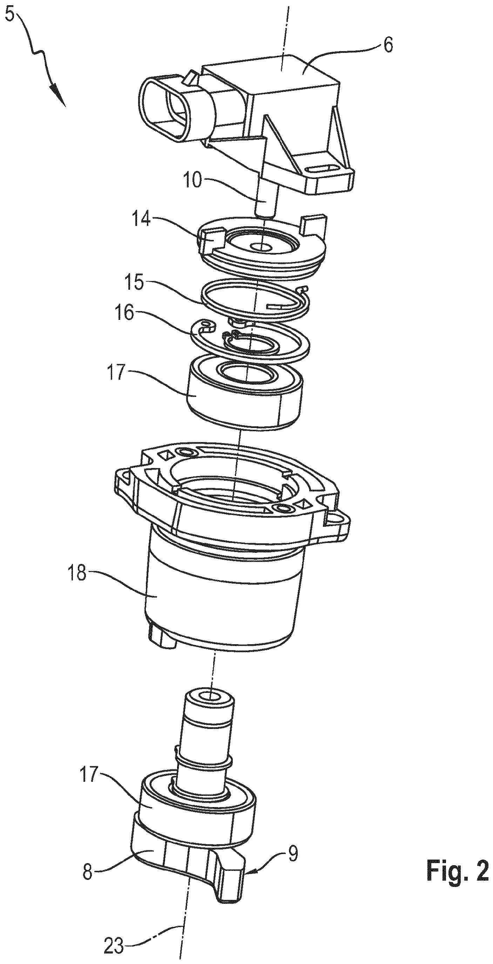

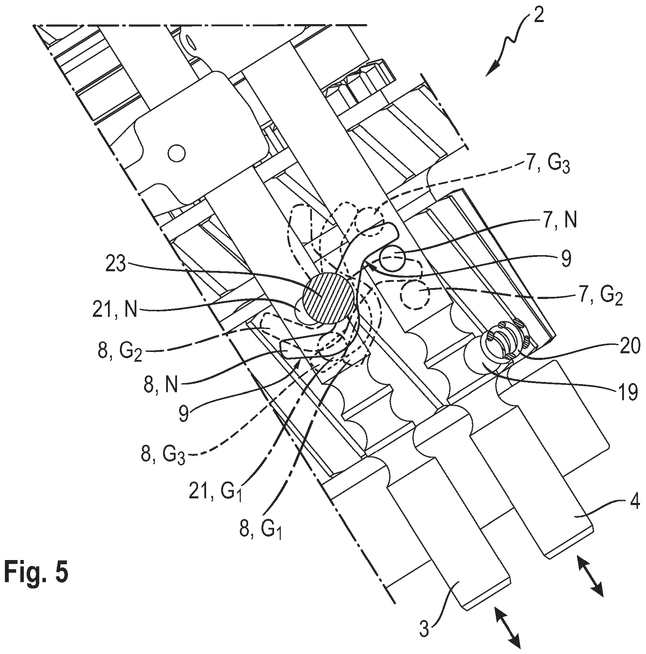

In Fig. 2 ist nun eine beispielhafte Sensoranordnung 5 in Explosionsdarstellung gezeigt. Dabei sind die einzelnen Komponenten der gezeigten Sensoranordnung 5 zum besseren Verständnis entlang einer Drehachse 23 auseinander gezogen. Als tragenden, kapselnden Körper weist die Sensoranordnung ein annähernd hohlzylinderförmiges Sensorgehäuse 18 auf. An dem Sensorgehäuse 18 ist in einem oberen Bereich ein umlaufender Wulst ausgebildet, in dem Bohrungen zur Befestigung der Sensoranordnung 5 am Achsgehäuse 12 vorgesehen sind. Eine Kurvenscheibe 8 ist mittels zweier Wälzlager 17 drehbar gegenüber dem Sensorgehäuse 18 gelagert und erstreckt sich mit einem zylindrischen Zapfen von unten in das Sensorgehäuse 18 hinein. Das obere Wälzlager 17 wird durch Sicherungsringe 16 gesichert und durch ein flächiges Dichtelement 14 (Deckel) nach oben hin (gegenüber dem Drehwinkelgeber 6) abgeschlossen. An der Kurvenscheibe 8 ist eine Führungsbahn 9 ausgebildet, die - wie noch anhand von Fig. 5 zu erläutern sein wird - einen Kontaktbereich zwischen der Kurvenscheibe 8 und einem (hier nicht dargestellten) Eingriffselement 7, 21 einer Schaltstange bildet. Der Kurvenscheibe 8 ist eine spiralförmige Spannfeder 15 zugeordnet, die sich gegenüber dem Sensorgehäuse 18 abstützt. Die Spannfeder 15 übt auf die Kurvenscheibe 8 eine drehwinkelabhängige Rückstellkraft aus, um zwischen der Kurvenscheibe 8 und einem in Fig. 5 dargestellten Eingriffselement 7, 21 eine spielfreie Berührung zu gewährleisten.

An der oberen (äußeren) Seite des Sensorgehäuses 18 ist der Drehwinkelgeber 6 angeordnet. Eine Messwelle 10 des Drehwinkelgebers 6 erstreckt sich in das Sensorgehäuse 18 hinein und fällt dabei mit der Drehachse 23 der Kurvenscheibe 8 zusammen. Die Kurvenscheibe 8 und die Messwelle 10 sind im montierten Zustand der Sensoranordnung 5 drehfest miteinander verbunden, so dass sich eine Drehung der Kurvenscheibe 8 um die Drehachse 23 auf die Messwelle 10 überträgt. Ein abhängig von der Drehstellung der Messwelle 10 im Drehwinkelgeber 6 erzeugtes Winkelsignal lässt sich über einen elektrischen Anschluss des Drehwinkelgebers 6 abgreifen.

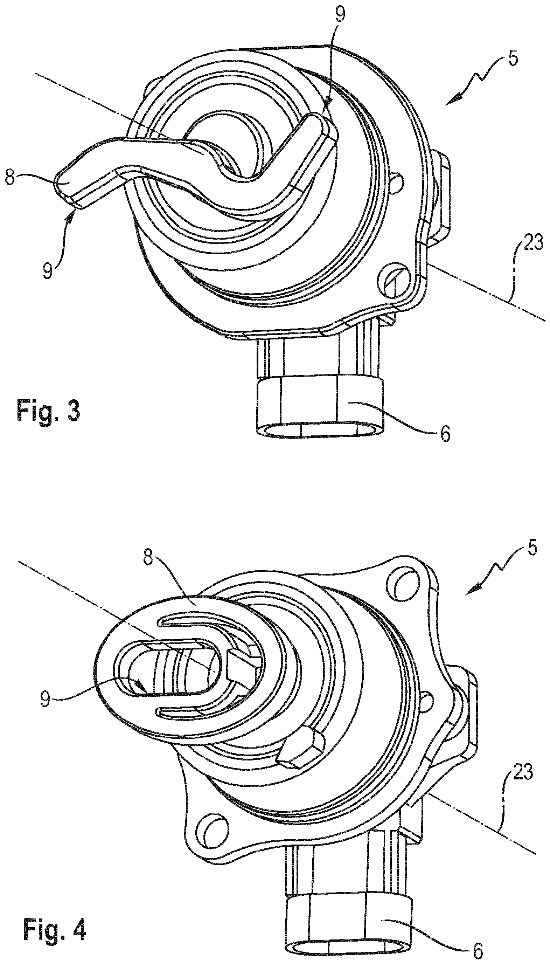

Wie teilweise in Fig. 1 zu sehen, lässt sich eine wie in Fig. 2 gezeigte Sensoranordnung 5 mittels des Sensorgehäuses 18 an einem durch das Gehäuse 12 der Triebachse 1 verlaufenden Durchgang 22, insbesondere im Bereich des Schaltgetriebes 2, derart befestigen, dass sich die Kurvenscheibe 8 innerhalb und der Drehwinkelgeber 6 außerhalb des Achsgehäuses 12 der Triebachse 1 befinden. Abhängig von der jeweiligen Getriebebauart und -gestaltung lässt sich die Sensoranordnung 5 dabei mit einer geeigneten Kurvenscheibe 8 ausstatten. In den Fig. 3 und 4 ist jeweils eine Sensoranordnung 5 in perspektivischer Ansicht gezeigt, die sich lediglich in der gewählten Kurvenscheibe 8 unterscheidet.

In Fig. 3 weist die Kurvenscheibe 8 eine S-Form auf. An der Kurvenscheibe 8 umfangsseitig ausgebildete Führungsbahnen 9 weisen demnach einen gekrümmten Verlauf auf. Die Kurvenscheibe 8 gemäß Fig. 3 mit zwei Führungsbahnen 9 eignet sich insbesondere zum Einsatz in einem Schaltgetriebe 2 mit zwei Schaltstangen 3, 4, wie in Fig. 5 dargestellt und noch zu erläutern.

Im Unterschied dazu ist in Fig. 4 die Kurvenscheibe 8 so geformt, dass durch eine längliche Nut eine Führungsbahn 9 mit geradlinigem Verlauf gebildet wird. Diese Nut kann ein an einer Schaltstange 3 angeordnetes Eingriffselement aufnehmen. Die Kurvenscheibe 8 gemäß Fig. 4 mit einer einzigen Führungsbahn 9 eignet sich insbesondere zum Einsatz in einem wie in Fig. 1 dargestellten Schaltgetriebe 2 mit einer einzigen Schaltstange 3.

Die Funktionsweise der Gangerkennung an einer erfindungsgemäßen Triebachse 1 sei nachfolgend anhand eines in Fig. 5 dargestellten Ausführungsbeispiels beschrieben.

Fig. 5 zeigt eine Draufsicht auf eine Kurvenscheibe 8 innerhalb eines Schaltgetriebes 2, wobei verschiedene Schaltzustände durch unterschiedliche Drehstellungen der Kurvenscheibe 8 sowie durch unterschiedliche Positionen von an den Schaltstangen 3, 4 angeordneten Mitnehmerstiften 7, 21 angedeutet sind. Das Schaltgetriebe 2 ist nur ausschnittsweise dargestellt, da zur Erläuterung der Funktionsweise der Sensoranordnung 5 insbesondere das Zusammenwirken von Kurvenscheibe und Schaltstangen von Bedeutung ist.

Bei dem Ausführungsbeispiel handelt es sich um ein Schaltgetriebe 2 mit Klauenschaltung, das über eine erste Schaltstange 3 und eine zweite Schaltstange 4 verfügt und das durch gezieltes axiales Verschieben (angedeutet durch Pfeile) dieser Schaltstangen 3, 4 in insgesamt vier Gangstufen N, G₁, G₂, G₃ schaltbar ist. An der ersten Schaltstange 3 ist ein Mitnehmerstift 21 angeordnet und an der zweiten Schaltstange 3 ist ein Mitnehmerstift 7 angeordnet. Bei einer Verschiebung der jeweiligen Schaltstange 3, 4 verschiebt sich somit auch der jeweilige Mitnehmerstift 7, 21 mit, so dass in der Darstellung von Fig. 5 die Position der Mitnehmerstifte 7, 21 den Verschiebezustand der jeweiligen Schaltstange 3 bzw. 4 andeuten soll.

Noch zu erläuternde mechanische Führungsmittel sorgen dafür, dass sich allein durch Erfassung der Drehung der Kurvenscheibe 8 um die Drehachse 23 mittels eines einzigen (in dieser Ansicht nicht sichtbaren) Drehwinkelgebers 6 sämtliche vier Gangstufen N, G₁, G₂, G₃ anhand einer Auswertung des dabei erzeugten Winkelsignals erkennen lassen. Dazu ist der Drehwinkelgeber über die mechanischen Führungsmittel 7, 8, 9, 21 mit beiden Schaltstangen 3, 4 kinematisch koppelbar.

Die Kurvenscheibe 8, die vorzugsweise Teil einer wie in Fig. 2 und 3 dargestellten und zuvor erläuterten Sensoranordnung 5 ist, lässt sich um die Drehachse 23 drehen. Die erste Schaltstange 3 und die zweite Schaltstange 4 verlaufen parallel zueinander und sind voneinander beabstandet, wobei die Drehachse 23 der Kurvenscheibe 8 gegenüber der ersten Schaltstange 3 weniger beabstandet ist als gegenüber der zweiten Schaltstange 4. Der unterschiedliche Abstand, also die außermittige Anordnung der Drehachse 23 gegenüber den Schaltstangen 3, 4 bewirkt, dass die Kurvenscheibe 8 aufgrund unterschiedlicher wirksamer Hebellängen in unterschiedlichem Maße durch Verschiebungen der Schaltstangen 3, 4 ausgelenkt (verdreht) wird. Konkret: Die näher an der Drehachse 23 der Kurvenscheibe 8 verlaufende erste Schaltstange 3 bewirkt bei gleicher translatorischer Verschiebung eine stärkere Drehung der Kurvenscheibe 8 als die weiter von der Drehachse 23 entfernte zweite Schaltstange 4.

Wie weiterhin zu sehen, weist die Kurvenscheibe 8 eine S-Form auf. Dabei weist ein länglicher Grundkörper der Kurvenscheibe 8 in einem sich zur zweiten Schaltstange 4 erstreckenden Bereich eine Krümmung auf, die entgegengesetzt ist zur Krümmung in einem sich zur ersten Schaltstange 3 erstreckenden Bereich. An der Kurvenscheibe 8 sind zwei Führungsbahnen 9 an gegenüberliegenden Seiten ausgebildet. Dabei dient eine der Führungsbahnen 9 als Kontaktbereich zwischen der Kurvenscheibe 8 und einem Mitnehmerstift 21 der ersten Schaltstange 3. Die andere Führungsbahn 9 dient als Kontaktbereich zwischen Kurvenscheibe 8 und einem Mitnehmerstift 7 der zweiten Schaltstange 4.

Wie der Darstellung der Fig. 5 zu entnehmen, sind die Mitnehmerstifte 7, 21 und die Kurvenscheibe 8 so ausgebildet und zueinander angeordnet, dass eine innerhalb von Schaltvorgängen stattfindende Verschiebung der Schaltstangen 3, 4 durch gegenseitigen Kontakt von Mitnehmerstiften 7, 21 und Kurvenscheibe 8 eine entsprechende Drehung der Kurvenscheibe 8 bewirkt. Dazu seien nachfolgend die mit der Anordnung erfassbaren Gangstufen N, G_{1 bis 3} erläutert, bei denen abhängig von der jeweiligen Gangstufe entweder der Mitnehmerstift 21 der ersten Schaltstange 3 oder der Mitnehmerstift 7 der zweiten Schaltstange 4 mit der Kurvenscheibe 8 in Kontakt steht:

| | | |
|---|---|---|
| N | Mitnehmerstift 21, N | Kein Kontakt mit Kurvenscheibe 8 |
| | Mitnehmerstift 7, N | Kontakt mit Kurvenscheibe 8 |
| G₁ | Mitnehmerstift 21, G₁ | Kontakt mit Kurvenscheibe 8 |
| | Mitnehmerstift 7, N | kein Kontakt mit Kurvenscheibe 8 |
| G₂ | Mitnehmerstift 21, N | kein Kontakt mit Kurvenscheibe 8 |
| | Mitnehmerstift 7, G₂ | Kontakt mit Kurvenscheibe 8 |
| G₃ | Mitnehmerstift 21, N Mitnehmerstift 7, G₃ | kein Kontakt mit Kurvenscheibe 8 Kontakt mit Kurvenscheibe 8 |

Durch die Anordnung und Geometrie von Kurvenscheibe 8 und Schaltstangen 3, 4 ist sichergestellt, dass bei jeder der möglichen Gangstufen N, G_{1 bis 3} die Kurvenscheibe 8 eine andere Winkelstellung (angedeutet durch Bezugszeichen an der Kurvenscheibe: N, G₁, G₂, G₃) bezogen auf deren Drehachse 23 aufweist. Demnach erzeugt der Drehwinkelgeber 6 bei jeder Gangstufe N, G_{1 bis 3} ein Winkelsignal S, das sich vom Winkelsignal einer anderen Gangstufe unterscheidet. Somit ist eine eindeutige Zuordnung zwischen Winkelsignal S und eingelegter Gangstufe möglich.

Damit die Kurvenscheibe 8 zur spielfreien Gangerfassung stets in Kontakt mit einem der Mitnehmerstifte 7, 21 steht, übt eine bereits im Zusammenhang von Fig. 2 erläuterte, in die Sensoranordnung 5 integrierte Rückstellfeder 15 auf die Kurvenscheibe 8 ein im Uhrzeigersinn wirkendes Rückstellmoment aus. Dieses Moment sorgt dafür, dass die Kurvenscheibe in den Gangstufen N, G₂, G₃ jeweils gegen den Mitnehmerstift 7 der zweiten Schaltstange 4 und in der Gangstufe G₁ gegen den Mitnehmerstift 21 der ersten Schaltstange 3 gedrückt wird

An jeder der Schaltstangen 3, 4 sind in axialem Abstand voneinander ringförmige Nuten ausgebildet. Für die zweite Schaltstange 4 ist angedeutet, dass eine Kugel 19, die mittels einer Rastfeder 20 gegen die Schaltstange 4 gedrückt wird, in eine mittlere von drei ringförmigen Nuten eingerastet ist, die mit der Gangstufe N korrespondiert. Abhängig von der gewählten Gangstufe kann die Kugel 19 in eine andere der beiden Nuten einrasten. Für die erste Schaltstange 3 kann ebenfalls eine solche federbelastete Kugel eingesetzt werden. In jedem der Fälle sorgt das Einrasten der Kugel in die ringförmige Nut für eine Arretierung der mit der Schaltstange 3, 4 jeweils gewählten Gangstufe.

Die beschriebene Triebachse ermöglicht, dass mit einem einzigen, konstruktiv einfach gestalteten Drehwinkelgeber verschiedene Gangstufen eines Schaltgetriebes erfasst werden. Eine Verwendung an verschiedenartigen mehrgängigen Schaltgetrieben, wie beispielsweise Klauenschaltgetrieben oder Schieberadgetrieben, ist denkbar. Die Sensoranordnung kann dabei so gestaltet sein, dass diese für verschiedene Getriebetypen einen gleichen Grundaufbau aufweist und sich lediglich in der verwendeten Kurvenscheibe unterscheidet. Da nur ein Drehwinkelgeber zur Erfassung sämtlicher Gangstufen erforderlich ist, verringern sich der Montage- und Verkabelungsaufwand sowie die Störanfälligkeit. Zudem ist im Falle einer Störung die Fehlerdiagnose und-behebung deutlich erleichtert.

### Bezugszeichenliste

- 1: Vorderachse
- 2: Schaltgetriebe
- 3: erste Schaltstange
- 4: zweite Schaltstange
- 5: Sensoranordnung
- 6: Drehwinkelgeber
- 7: Mitnehmerstift
- 8: Kurvenscheibe
- 9: Führungsbahn
- 10: Messwelle
- 11: Radabtrieb
- 12: Achsgehäuse
- 13: Schaltzylinder
- 14: Dichtelement
- 15: Spannfeder
- 16: Sicherungsring
- 17: Lager
- 18: Sensorgehäuse
- 19: Kugel
- 20: Rastfeder
- 21: Mitnehmerstift
- 22: Gehäusedurchgang
- 23: Drehachse
- 24: Auswertelektronik

- N: Neutralstellung
- G₁: erste Gangstufe
- G₂: zweite Gangstufe
- G₃: dritte Gangstufe
- S: Winkelsignal

## Patentansprüche

1. Triebachse (1) für ein Fahrzeug, insbesondere für eine landwirtschaftliche Erntemaschine, mit integriertem Schaltgetriebe (2), das sich mittels zumindest eines beweglichen Stellelements (3, 4) in mehrere Gangstufen (N, G₁, Gₙ) schalten lässt, und mit einer Sensoranordnung (5) zur Erfassung der eingelegten Gangstufe (N, G₁, Gₙ), **dadurch gekennzeichnet, dass** die Sensoranordnung (5) einen Drehwinkelgeber (6) aufweist, der über mechanische Führungsmittel (7, 8, 9, 21) mit dem zumindest einen Stellelement (3, 4) kinematisch gekoppelt ist, um abhängig von der Position des zumindest einen Stellelements (3, 4) ein Winkelsignal (S) zu erzeugen, das auf die eingelegte Gangstufe (N, G₁, Gₙ) des Schaltgetriebes (2) schließen lässt, wobei die mechanischen Führungsmittel (7, 8, 21) eine dem Drehwinkelgeber (6) zugeordnete um eine Drehachse (23) drehbar gelagerte Kurvenscheibe (8) sowie ein am Stellelement (3, 4) angeordnetes Eingriffselement (7, 21) umfassen, wobei das Eingriffselement (7, 21) und die Kurvenscheibe (8) so ausgebildet und zueinander angeordnet sind, dass eine Verschiebung des Stellelements (3, 4) durch gegenseitigen Kontakt von Eingriffselement (7, 21) und Kurvenscheibe (8) eine Drehung der Kurvenscheibe (8) bewirkt, wobei an der an der Kurvenscheibe (8) eine Führungsbahn (9) ausgebildet ist, die einen Kontaktbereich zwischen Kurvenscheibe (8) und Eingriffselement (7, 21) bildet.

2. Triebachse nach Anspruch 1, **dadurch gekennzeichnet, dass** es sich bei dem zumindest einen beweglichen Stellelement um eine Schaltstange (3, 4) handelt, die zwischen verschiedenen jeweils mit einer Gangstufe (N, G₁, Gₙ) korrespondierenden Positionen verschiebbar ist.

3. Triebachse nach Anspruch 1, **dadurch gekennzeichnet, dass** die Führungsbahn (9) durch eine das Eingriffselement teilweise aufnehmende vorzugsweise längliche Nut gebildet wird.

4. Triebachse nach Anspruch 1 oder 3, **dadurch gekennzeichnet, dass** die Kurvenscheibe (8) drehfest mit einer Messwelle (10) des Drehwinkelgebers (6) verbunden ist, wobei vorzugsweise die Drehachse (23) der Kurvenscheibe (8) mit der Messwelle (10) zusammenfällt.

5. Triebachse nach Anspruch 1 oder 3, **dadurch gekennzeichnet, dass** der Kurvenscheibe (8) ein Magnet zugeordnet ist und der Drehwinkelgeber (6) einen Magnetfeldsensor aufweist, um einen Drehwinkel der Kurvenscheibe (8) berührungslos zu erfassen.

6. Triebachse nach einem der vorigen Ansprüche, **dadurch gekennzeichnet, dass** das Schaltgetriebe (2) zwei verschiebbare Schaltstangen (3, 4) aufweist, wobei der Drehwinkelgeber (6) über die mechanischen Führungsmittel (7, 8, 9, 21) mit beiden Schaltstangen (3, 4) kinematisch koppelbar ist.

7. Triebachse nach Anspruch 6, **dadurch gekennzeichnet, dass** die Schaltstangen (3, 4) parallel zueinander verlaufen und voneinander beabstandet sind, wobei die Drehachse (23) der Kurvenscheibe (8) gegenüber einer ersten Schaltstange (3) weniger beabstandet ist als gegenüber einer zweiten Schaltstange (4).

8. Triebachse nach Anspruch 6 oder 7, **dadurch gekennzeichnet, dass** an der Kurvenscheibe (8) mehrere, vorzugsweise zwei Führungsbahnen (9) ausgebildet sind, wobei eine der Führungsbahnen (9) als Kontaktbereich zwischen Kurvenscheibe (8) und einem Eingriffselement (21) einer ersten Schaltstange (3) dient und eine weitere Führungsbahn (9) als Kontaktbereich zwischen Kurvenscheibe (8) und einem Eingriffselement (7) einer weiteren Schaltstange (4) dient.

9. Triebachse nach einem der vorigen Ansprüche, **dadurch gekennzeichnet, dass** die kinematische Kopplung zwischen dem zumindest einen Stellelement (3, 4) und dem Drehwinkelgeber (6) so gestaltet ist, dass sich ein vom Drehwinkelgeber (6) erzeugtes Winkelsignal (S) eindeutig einer eingelegten Gangstufe (N, G₁, Gₙ) zuordnen lässt.

10. Triebachse nach einem der vorigen Ansprüche, **dadurch gekennzeichnet, dass** dem Drehwinkelgeber (6) eine Auswerteinrichtung (24) zugeordnet ist, die es ermöglicht, die jeweils eingelegte Gangstufe (N, G₁, Gₙ) anhand von Differenzen der Winkelsignale (S) zu erkennen.

11. Triebachse nach einem der vorigen Ansprüche, **dadurch gekennzeichnet, dass** die Sensoranordnung (5) ein etwa hohlzylinderförmiges Sensorgehäuse (18) aufweist, wobei der Drehwinkelgeber (6) und die Kurvenscheibe (8) an gegenüberliegenden Seiten des Sensorgehäuses (18) angeordnet und durch das Sensorgehäuse (18) hindurch über eine Messwelle (10) drehfest verbunden sind.

12. Triebachse nach Anspruch 11, **dadurch gekennzeichnet, dass** der Kurvenscheibe (8) Rückstellmittel (15), insbesondere eine sich gegenüber dem Sensorgehäuse (18) abstützende Federanordnung, zugeordnet sind, die auf die Kurvenscheibe (8) eine drehwinkelabhängige Rückstellkraft ausüben, um zwischen Kurvenscheibe (8) und Eingriffselement (7, 21) eine spielfreie Berührung zu gewährleisten.

13. Triebachse nach Anspruch 11 oder 12, **dadurch gekennzeichnet, dass** die Sensoranordnung (5) mittels des Sensorgehäuses (18) an einem durch das Gehäuse (12) der Triebachse (1) verlaufenden Durchgang (22), insbesondere im Bereich des Schaltgetriebes (2), derart befestigt ist, dass sich die Kurvenscheibe (8) innerhalb und der Drehwinkelgeber (6) außerhalb des Gehäuses (12) der Triebachse (1) befinden.

## Claims

1. A drive axle (1) for a vehicle, in particular for an agricultural harvester, with integrated manual transmission (2) which can be shifted into a plurality of gear stages (N, G₁, Gₙ) by means of at least one movable control element (3, 4) and a sensor arrangement (5) for detecting the engaged gear stage (N, G₁, Gₙ), **characterised in that** the sensor arrangement (5) has a rotary angle encoder (6) which is kinematically coupled to the at least one control element (3, 4) by way of mechanical guide means (7, 8, 9, 21) in order in dependence on the position of the at least one control element (3, 4) to generate an angle signal (S) which indicates the engaged gear stage (N, G₁, Gₙ) of the manual transmission (2), wherein the mechanical guide means (7, 8, 21) include a cam disc (8) associated with the rotary angle encoder (6) and mounted rotatably about an axis of rotation (23) as well as an engagement element (7, 21) arranged at the control element (3, 4), wherein the engagement element (7, 21) and the cam disc (8) are so designed and arranged relative to each other that displacement of the control element (3, 4) causes rotation of the cam disc (8) by mutual contact of the engagement element (7, 21) and the cam disc (8), wherein provided on the cam disc (8) is a guide track (9) forming a contact region between the cam disc (8) and the engagement element (7, 21).

2. A drive axle according to claim 1 **characterised in that** the at least one movable control element is a shift rod (3, 4) displaceable between various positions respectively corresponding to a gear stage (N, G₁, Gₙ).

3. A drive axle according to claim 1 **characterised in that** the guide track (9) is formed by a preferably elongate groove partially accommodating the engagement element.

4. A drive axle according to claim 1 or claim 3 **characterised in that** the cam disc (8) is non-rotatably connected to a measurement shaft (10) of the rotary angle encoder (6), wherein preferably the axis of rotation (23) of the cam disc (8) coincides with the measurement shaft (10).

5. A drive axle according to claim 1 or claim 3 **characterised in that** a magnet is associated with the cam disc (8) and the rotary angle encoder (6) has a magnetic field sensor to detect a rotary angle of the cam disc (8) in contactless fashion.

6. A drive axle according to one of the preceding claims **characterised in that** the manual transmission (2) has two displaceable shift rods (3, 4), wherein the rotary angle encoder (6) can be kinematically coupled to both shift rods (3, 4) by way of the mechanical guide means (7, 8, 9, 21).

7. A drive axle according to claim 6 **characterised in that** the shift rods (3, 4) extend parallel to each other and are spaced from each other, wherein the axis of rotation (23) of the cam disc (8) is spaced less in relation to a first shift rod (3) than in relation to a second shift rod (4).

8. A drive axle according to claim 6 or claim 7 **characterised in that** a plurality of and preferably two guide tracks (9) are provided on the cam disc (8), wherein one of the guide tracks (9) serves as a contact region between the cam disc (8) and an engagement element (21) of a first shift rod (3) and a further guide path (9) serves as a contact region between the cam disc (8) and an engagement element (7) of a further shift rod (4).

9. A drive axle according to one of the preceding claims **characterised in that** the kinematic coupling between the at least one control element (3, 4) and the rotary angle encoder (6) is so designed that an angle signal (S) generated by the rotary angle encoder (6) can be uniquely associated with an engaged gear stage (N, G₁, Gₙ).

10. A drive axle according to one of the preceding claims **characterised in that** associated with the rotary angle encoder (6) is an evaluation device (24) which makes it possible to identify the respectively engaged gear stage (N, G₁, Gₙ) on the basis of differences in the angle signals (S).

11. A drive axle according to one of the preceding claims **characterised in that** the sensor arrangement (5) has an approximately hollow-cylindrical sensor housing (18), wherein the rotary angle encoder (6) and the cam disc (8) are arranged at mutually opposite sides of the sensor housing (18) and are non-rotatably connected through the sensor housing (18) by way of a measurement shaft (10).

12. A drive axle according to claim 11 **characterised in that** associated with the cam disk (8) are return means (15), in particular a spring arrangement supported with respect to the sensor housing (18) which exert a rotary angle-dependent return force on the cam disk (18) to ensure play-free contact between the cam disk (8) and the engagement element (7, 21).

13. A drive axle according to claim 11 or claim 12 **characterised in that** the sensor arrangement (5) is fixed by means of the sensor housing (18) to a passage (22) extending through the housing (12) of the drive axle (1), in particular in the region of the manual transmission (2), in such a way that the cam disc (8) is disposed within the housing (12) of the drive axle (1) and the rotary angle encoder (6) is disposed outside the housing (12).

## Revendications

1. Essieu moteur (1) pour un véhicule, en particulier pour une machine agricole de récolte, comprenant une transmission intégrée (2) qui peut être commutée entre plusieurs rapports (N, G₁, Gₙ) au moyen d'au moins un élément de réglage mobile (3, 4), et comprenant un agencement de capteur (5) pour détecter le rapport engagé (N, G₁, Gₙ) , **caractérisé en ce que** l'agencement de capteur (5) comporte un indicateur de position angulaire (6) qui, par l'intermédiaire de moyens de guidage mécaniques (7, 8, 9, 21), est couplé cinématiquement au au moins un élément de réglage (3, 4) pour générer, en fonction de la position du au moins un élément de réglage (3, 4), un signal angulaire (S) qui permet de déduire le rapport engagé (N, G₁, Gₙ) de la transmission (2), les moyens de guidage mécaniques (7, 8, 21) incluant une came (8) associée à l'indicateur de position angulaire, montée à rotation autour d'un axe de rotation (23), ainsi qu'un élément d'engagement (7, 21) disposé sur l'élément de réglage (3, 4), l'élément d'engagement (7, 21) et la came (8) étant conformés et disposés l'un par rapport à l'autre, de façon qu'un déplacement de l'élément de réglage (3, 4) par contact réciproque de l'élément d'engagement (7, 21) et de la came (8) provoque une rotation de la came (8), sur la came (8) étant ménagée une glissière de guidage (9) qui forme une zone de contact entre la came (8) et l'élément d'engagement (7, 21).

2. Essieu moteur selon la revendication 1, **caractérisé en ce que** le au moins un élément de réglage mobile est constitué par une tige de commande de transmission (3, 4) qui est déplaçable entre diverses positions correspondant respectivement à un rapport (N, G₁, Gₙ).

3. Essieu moteur selon la revendication 1, **caractérisé en ce que** la glissière de guidage (9) est formée par une rainure de préférence allongée recevant partiellement l'élément d'engagement.

4. Essieu moteur selon la revendication 1 ou 3, **caractérisé en ce que** la came (8) est solidarisée en rotation à un arbre de mesure (10) de l'indicateur de position angulaire (6), de préférence l'axe de rotation (23) de la came (8) coïncidant avec l'arbre de mesure (10).

5. Essieu moteur selon la revendication 1 ou 3, **caractérisé en ce qu'**à la came (8) est associé un aimant, et l'indicateur de position angulaire (6) comporte un capteur de champ magnétique pour détecter sans contact un angle de rotation de la came (8).

6. Essieu moteur selon une des revendications précédentes, **caractérisé en ce que** la transmission (2) comporte deux tiges de commande de transmission déplaçables (3, 4), l'indicateur de position angulaire (6) étant couplable cinématiquement aux deux tiges de commande de transmission (3, 4) par l'intermédiaire des moyens de guidage mécaniques (7, 8, 9, 21).

7. Essieu moteur selon la revendication 6, **caractérisé en ce que** les tiges de commande de transmission (3, 4) s'étendent parallèlement l'une à l'autre et sont distantes l'une de l'autre, l'axe de rotation (23) de la came (8) étant moins distant d'une première tige de commande de transmission (3) que d'une seconde tige de commande de transmission (4).

8. Essieu moteur selon la revendication 6 ou 7, **caractérisé en ce que** sur la came (8) sont ménagées plusieurs, de préférence deux, glissières de guidage (9), une des glissières de guidage (9) servant de zone de contact entre la came (8) et un élément d'engagement (21) d'une première tige de commande de transmission (3), et une autre glissière de guidage (9) servant de zone de contact entre la came (8) et un élément d'engagement (7) d'une autre tige de commande de transmission (4).

9. Essieu moteur selon une des revendications précédentes, **caractérisé en ce que** le couplage cinématique entre le au moins un élément de réglage (3, 4) et l'indicateur de position angulaire (6) est conçu de façon qu'un signal angulaire (S) généré par l'indicateur de position angulaire (6) puisse être associé de manière univoque à un rapport engagé (N, G₁, Gₙ).

10. Essieu moteur selon une des revendications précédentes, **caractérisé en ce qu'**à l'indicateur de position angulaire (6) est associé un équipement d'analyse (24) qui, à l'aide de différences entre les signaux angulaires (S), permet de reconnaître le rapport engagé respectif (N, G₁, Gₙ)

11. Essieu moteur selon une des revendications précédentes, **caractérisé en ce que** l'agencement de capteur (5) comporte un boîtier de capteur cylindrique creux (18), l'indicateur de position angulaire (6) et la came (8) étant disposés sur des côtés opposés du boîtier de capteur (18) et étant solidarisés en rotation à travers le boîtier de capteur (18) par l'intermédiaire d'un arbre de mesure (10).

12. Essieu moteur selon la revendication 11, **caractérisé en ce qu'**à la came (8) sont associés des moyens de rappel (15), en particulier un agencement de ressorts qui prend appui sur le boîtier de capteur (18) et qui exerce sur la came (8) une force de rappel en fonction de l'angle de rotation afin de garantir un contact sans jeu entre la came (8) et l'élément d'engagement (7, 21).

13. Essieu moteur selon la revendication 11 ou 12, **caractérisé en ce qu'**au moyen du boîtier de capteur (18), l'agencement de capteur (5) est fixé à un passage (22) s'étendant à travers le carter (12) de l'essieu moteur (1), en particulier dans la plage de la transmission (2), de façon que la came (8) se trouve à l'intérieur du carter (12) de l'essieu moteur (1) et l'indicateur de position angulaire (6) à l'extérieur de celui-ci.
